# EUROPEAN PATENT APPLICATION

(11) **EP 4 770 095 A1**
(43) Date of publication of application: **01.07.2026**
(21) Application number: 24307330.1
(22) Date of filing: 30.12.2024
(51) Int. Cl.: H04N 19/597, G06N 3/045

(54) **POINT CLOUD DEEP LEARNING INPAINTING OF PROJECTIONS**

(71) Applicant: InterDigital CE Patent Holdings, SAS, 75017 Paris (FR)
(72) Inventor: BORBA PINHEIRO, Rodrigo, 35700 RENNES (FR); MARVIE, Jean-Eudes, 22190 PLERIN (FR)
(74) Representative: Rittner, Karsten

(57) **Abstract**

Systems and method directed to point cloud deep learning inpainting of projections. One example is directed to a computer-implemented method for video encoding or decoding including deriving non-projected points from decoded geometry of a three-dimensional -3D-point cloud, predicting attributes for the non-projected points using a convolutional neural network, and encoding or decoding the 3D point cloud based on the attributes.

## Description

### BACKGROUND

The present application is related to point cloud encoding and decoding, and in particular, deep learning inpainting of point projections.

### BRIEF SUMMARY

Briefly stated, in one embodiment a computer-implemented method is provided for video encoding or decoding that includes deriving non-projected points from decoded geometry of a three-dimensional (3D) point cloud, predicting attributes for the non-projected points using a convolutional neural network, and encoding or decoding the 3D point cloud based on the attributes.

In some embodiments, the techniques described herein relate to a non-transitory computer-readable medium comprising instructions that, when executed by an electronic processor, causes the electronic processor to derive non-projected points from decoded geometry of a 3D point cloud, predict attributes for the non-projected points using a convolutional neural network, and encode or decode the 3D point cloud based on the attributes.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:
FIG. 1 is a block diagram illustrating an example system according to one or more embodiments of the present disclosure;
FIG. 2 is a block diagram illustrating an example video encoder according to one or more embodiments of the present disclosure;
FIG. 3 is a block diagram illustrating an example video decoder according to one or more embodiments of the present disclosure;
FIG. 4 is a block diagram illustrating an example method for encoding and decoding point clouds (PCs) according to one or more embodiments of the present disclosure;
FIG. 5 is a block diagram illustrating an example method for encoding and decoding PCs according to one or more embodiments of the present disclosure;
FIG. 6 is a block diagram illustrating an example method for encoding PCs according to one or more embodiments of the present disclosure;
FIG. 7 is a block diagram illustrating an example method for decoding PCs according to one or more embodiments of the present disclosure;
FIG. 8 is a block diagram illustrating an example method for encoding PCs according to one or more embodiments of the present disclosure;
FIG. 9 is a block diagram illustrating an example method for decoding PCs according to one or more embodiments of the present disclosure;
FIG. 10 is a flowchart of an example method of PC encoding or decoding according to one or more embodiments of the present disclosure;
FIG. 11 illustrates a structure of a convolutional neural network (CNN) for encoding or decoding three-dimensional (3D) PCs according to one or more embodiments of the present disclosure;
FIG. 12 illustrates an example partial sparse convolution process according to one or more embodiments of the present disclosure; and
FIG. 13 illustrates an example of inpainting projections of 3D PCs according to one or more embodiments of the present disclosure.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

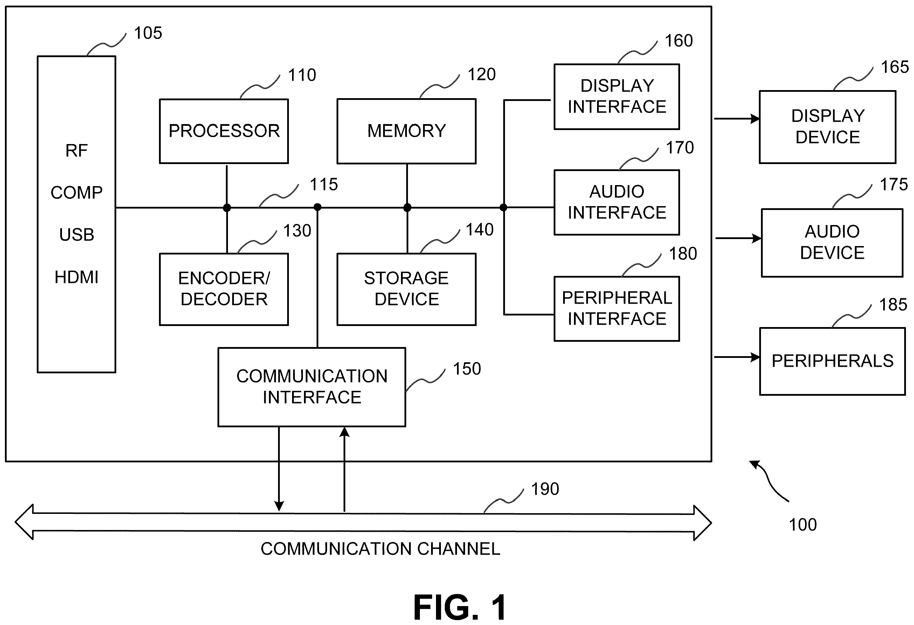

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

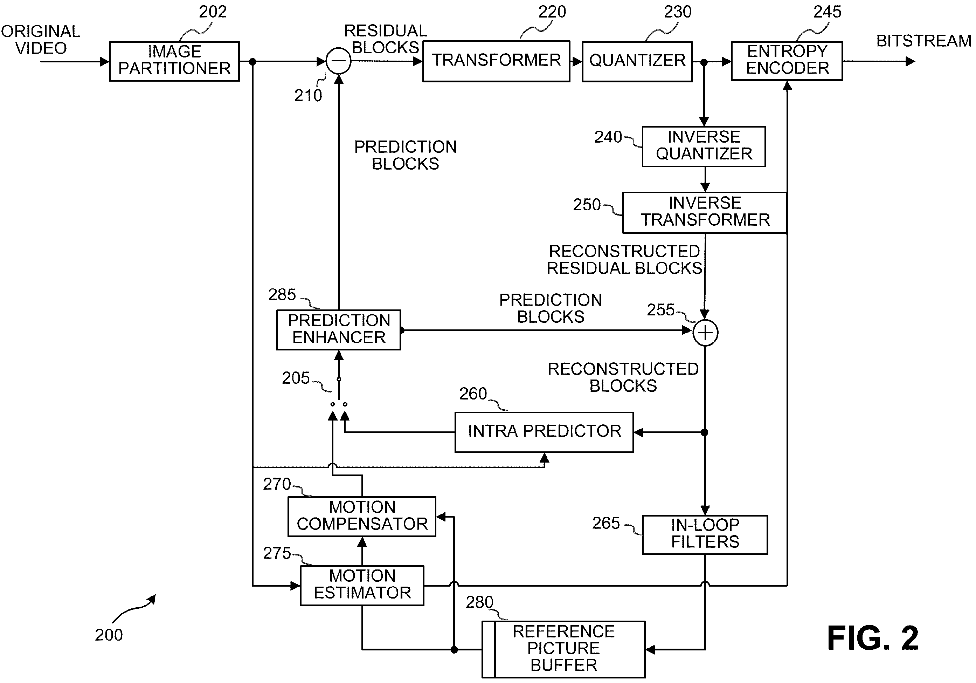

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

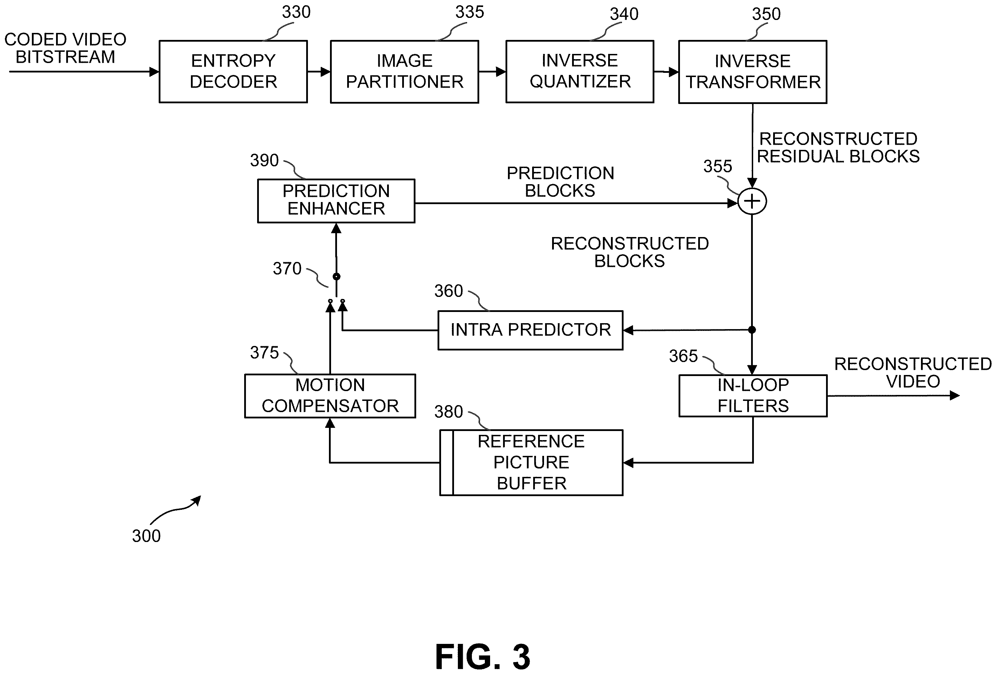

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, U and V (also denoted herein by C).

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU includes a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (i.e., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (reconstruct) respective residual blocks. Depending on the selected prediction mode, a predicted block can be obtained at 370 from an intra predictor 360 (i.e., intra prediction) or from a motion compensator 375 (i.e., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Two-dimensional (2D) video codecs as described above can be used to compress three-dimensional (3D) point clouds (PCs) as used in, for example, video games, augmented reality (AR), virtual reality (VR), mixed reality (MR), or similar experiences. The points of a PC are projected onto a 2D surface and the 2D surface can be encoded using 2D video codecs. During projection, geometry (e.g., size, shape, etc.) of the PCs may be separated from the attributes (e.g., per point color, per point normal vectors, IDs, etc.) and compressed. The geometry and the attributes are encoded using 2D codecs (e.g., traditional codec that are not based on deep learning, deep learning based codecs, or the like).

Some points of the PCs, however, may not be projected onto the 2D surface because, for example, these points may not project orthogonally to a single plane. For example, because projection blocks may not be aligned with PC normal, a point can be occluded by a point that is behind it in an included plane. In these situations, the attributes of the non-projected points may be missed during compression and transmission. Example techniques are provided below to inpaint points that were missed when a projection of point clouds voxels occurs to compress their attributes. The below techniques may also apply to any PC codecs, for example, Video-based Point Cloud Compression (V-PCC), Geometry-based Point Cloud Compression (G-PCC), GSTM, Deep Learning based codes, and the like. Accordingly, in some embodiments, the inpainting described herein may be agnostic to how the geometry is coded, and, in some embodiments, no metadata is sent by the encoder to the decoder to identify the non-projected points.

For example, as described in more detail herein, a decoder receives and decodes a geometry, which may be coded using any technique, and receives and decodes projected attributes, which may make use of any kind of projection-image coding (e.g., 2D patch atlas attribute coding technique). The decoder then identifies the missing attributes (i.e., the non-projected points). This can be done by mapping the decoded projected attributes to the decoded geometry and identifying which geometry points don't have attributes (e.g., by their indexes). For example, assuming the same geometry (already decoded) and the indexes of the points are the same as in the encoder projection, the exact same points will be projected on the decoder side. A mapping can then be produced that links each pixel in the projected image to an index in the PC and an original PC can be reconstructed (e.g., with the occluded points painted in black or otherwise marked or identified).
Accordingly, as noted above, this identification can be performed without requiring any extra metadata from the encoder). The decoder then fills in the attributes for these non-projected points using (1) an inpainting as described herein as an initial prediction and then refining the predictions using residuals sent from the encoder or (2) an inpainting as described herein alone (i.e., no residual signal is included in the bitstream). Thus, the order of the decoded geometry is assumed to be the same on both sides (i.e., encoder and encoder), and since the projection algorithm is deterministic, the result is the same on both sides.

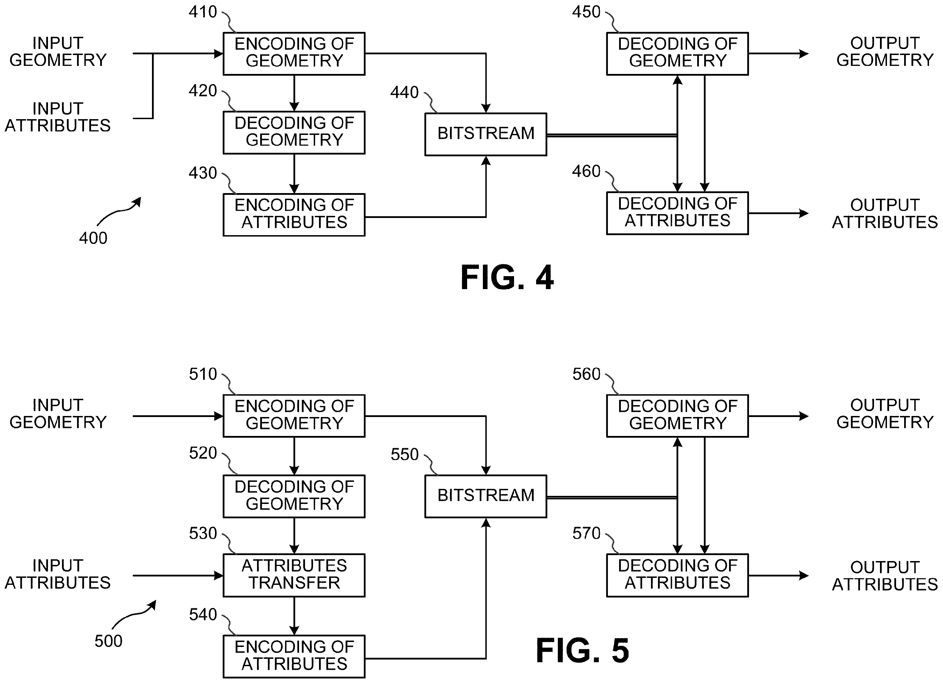

FIG. 4 is a block diagram illustrating an example PC encoding and decoding method 400 for transmitting 3D PCs using 2D codecs as implemented by system 100 (e.g., via the encoder/decoder module 130).

As noted above, PCs may be processed to separate the geometry and the attributes. The geometry may be projected orthogonally on a 2D surface and the attributes corresponding to the geometry and/or the points may be tracked using indices. The geometry and attributes may be received as inputs for encoding of geometry at block 410. The geometry is encoded separately from the attributes, but the attributes may be tracked with respect to the encoded geometry.

The encoded geometry is provided as an input along with the attributes for decoding of the geometry at block 420. The encoder 200 decodes the geometry to encode the attributes and determine any residuals. The encoder 200 decodes the geometry using the encoded geometry at block 410. The attributes indices may be tracked at blocks 410 and 420 such that the attributes for each decoded point of the PC may be known or tracked.

The decoded geometry and tracked attributes are provided as inputs for encoding of attributes at block 430. The encoder 200 encodes the attributes using the decoded geometry and the attributes, for example, based on the tracked indices. The encoded geometry and the encoded attributes are added to the bitstream 440. The decoder 300 decodes the geometry at block 450 from the bitstream 440 and decodes the attributes at block 460 using the decoded geometry and the bitstream 440.

FIG. 5 is a block diagram illustrating an example PC encoding and decoding method 500 for transmitting 3D PCs using 2D codecs as implemented by system 100 (e.g., via the encoder/decoder module 130).

As noted above, PCs may be processed to separate the geometry and the attributes. The geometry may be projected orthogonally on a 2D surface and the attributes corresponding to the geometry and/or the points may be tracked using indices. The geometry may be received as an input for encoding of geometry at block 510. The geometry is encoded separately from the attributes.

The encoded geometry is provided as an input for decoding of geometry at block 520. The encoder 200 decodes the geometry to encode the attributes and determine any residuals. The encoder 200 decodes the geometry using the encoded geometry at block 510. The decoded geometry and the attributes may be received as input for transferring the attributes at block 530. Unlike with respect to method 400, the attribute indices may not be tracked in the method 500. Rather, at block 530, the encoder 200 transfers the attributes of the original PC to the decoded PC (e.g., decoded geometry).

The decoded geometry and transferred attributes are provided as inputs for encoding of attributes at block 540. The encoder 200 encodes the attributes using the decoded geometry and the attributes, for example, based on the transferred attributes. The encoded geometry and the encoded attributes are added to the bitstream 550. The decoder 300 decodes the geometry at block 560 from the bitstream 550 and decodes the attributes at block 570 using the decoded geometry and the bitstream 550.

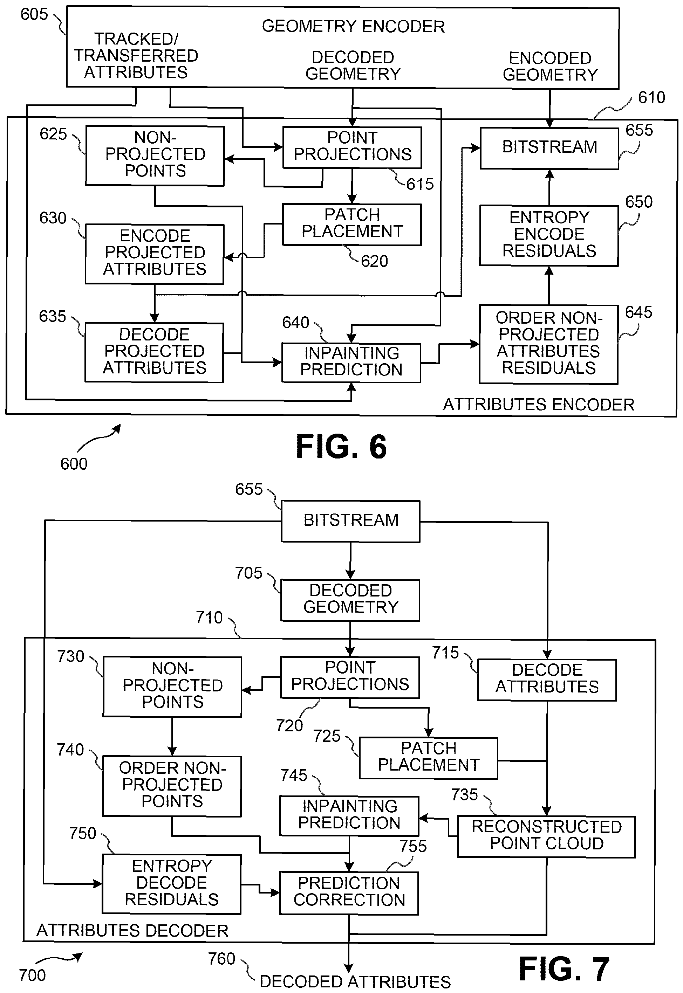

FIG. 6 is a block diagram illustrating an example PC encoding method 600 that may be implemented in blocks 410-430 of method 400 and/or blocks 510-540 of method 500. Specifically, the PC encoding method 600 may be performed by the electronic processor (e.g., processor 110) of the encoder 200.

A geometry encoder 605 provides outputs of encoded geometry, decoded geometry, and tracked or transferred attributes. As described above with respect to method 400 and 500, the geometry is encoded and decoded at blocks 410, 420 of method 400 and blocks 510, 520 of method 500. The attributes encoder 610 receives the decoded geometry and the tracked or transferred attributes as inputs. For example, the tracked attributes may be received with the decoded geometry as described with respect to block 430 of method 400 or the transferred attributes may be received with the decoded geometry as described with respect to block 540 of method 400.

The decoded geometry and attributes are used to generate point projections 615 which includes patch placement 620 of projected points and a collection of non-projected points 625. Patch placement 620 includes the placement of projectable points on a 2D surface as described above. The attributes of projected points are encoded at block 630. The attributes of projected points may be encoded using traditional codecs or deep learning based codecs.

The encoded attributes are decoded at block 635 to determine non-projected point attributes and to compute residuals. The decoded attributes, the decoded geometry, the tracked or transferred attributes, and the collection of non-projected points 625 are provided as inputs to a prediction block 640. The prediction block 640 may apply the decoded attributes to the decoded geometry to reconstruct the PC. The attributes of the non-projected points may be determined by comparing the decoded attributes to the tracked or transferred attributes.

The prediction block 640 inpaints the non-projected point attributes using deep learning as further explained below. The prediction block 640 may also compute residuals for entropy coding based on the inpainted non projected point attributes. The non-projected point attributes residuals are ordered at block 645 and entropy coded at block 650. The ordering of the non-projected point attributes residuals may be performed using a 3D to 1D Morton ordering or 3D to 2D Morton ordering. The entropy coding may be performed using a traditional codec or a deep learning based codec. The bitstream 655 is generated from the encoded geometry, encoded projected point attributes, and the non-projected point attributes residuals.

FIG. 7 is a block diagram illustrating an example PC decoding method 700 that may be implemented in blocks 450-460 of method 400 and/or blocks 560-570 of method 500. Specifically, the PC decoding method 700 may be performed by the electronic processor (e.g., processor 110) of the decoder 300. The PC decoding method 700 may be used by a decoder 300 to decode the bitstream 655 as generated by method 600.

The bitstream 655 is processed to separate the portions relating to the geometry, the attributes, and the residuals. The geometry is decoded at block 705 from the separated portion of the bitstream 655. The attributes decoder 710 receives the decoded geometry and the portions of the bitstream 655 corresponding to the attributes. The attributes are decoded at block 715. The attributes may be decoded using a traditional codec or a deep learning codec depending on the encoding scheme.

The decoded geometry is used to generate point projections 720 which includes patch placement 725 of projected points and a collection of non-projected points 730. Patch placement 725 includes the placement of projectable points on a 2D surface as described above. The decoded attributes from block 715 are applied to the patch placement 725 and a reconstructed point cloud is generated at block 735. The collection of non-projected points is ordered at block 740. The ordering of the non-projected point attributes residuals may be performed using a 3D to 1D Morton ordering or 3D to 2D Morton ordering.

The reconstructed point cloud and the collection of non-projected points 730 are provided as inputs to a prediction block 745. From the reconstructed point cloud, the prediction block 745 may determine which decoded geometry points do not have corresponding attributes. The prediction block 745 inpaints the non-projected point attributes using deep learning as further explained below and generates predictions for the non-projected point attributes.

The residual portions of the bitstream 655 are entropy decoded at block 750. The entropy decoding may be performed using traditional codecs or deep learning based codecs depending on the entropy encoding scheme. The predictions from the prediction block 745 are corrected at block 755 using the decoded residuals along with the ordered non projected points from block 740 and combined with the decoded attributes from block 715 to generate the decoded point attributes 760.

FIG. 6-7 illustrate method 600 and 700 where inpainting using deep learning is performed at both the encoder 200 and the decoder 300 and the inpainting is used at the encoder 200 to compute residuals. The computed residuals may be used to correct any predictions at the decoder 300. However, in some embodiments, inpainting may not be performed at the encoder 200 to compute residuals. Rather, inpainting is only performed at the decoder 300 and no residuals are exchanged between the encoder 200 and the decoder 300.

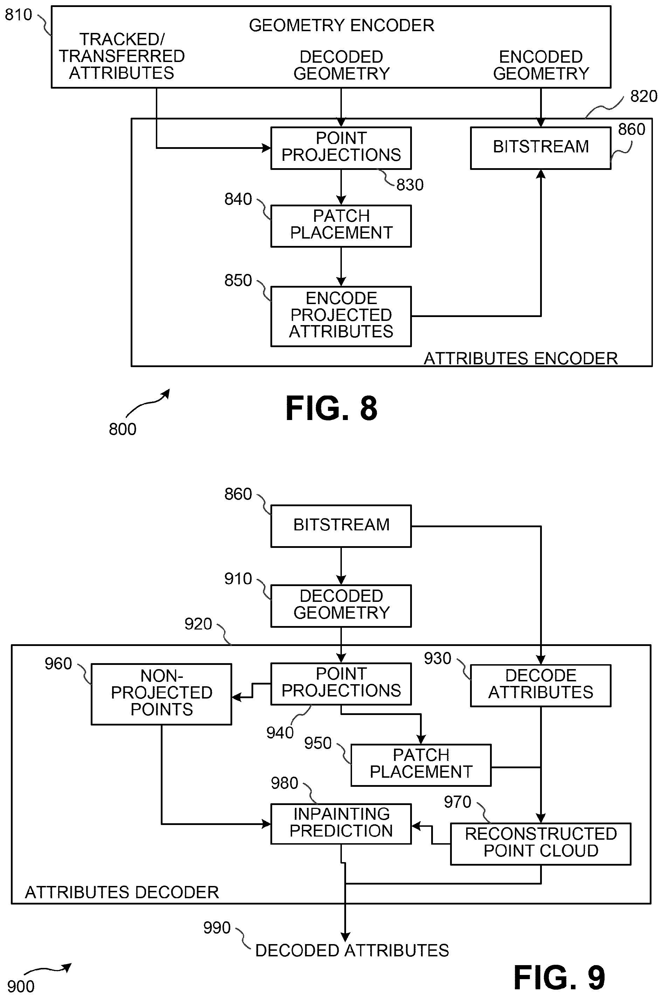

FIG. 8 is a block diagram illustrating an example PC encoding method 800 that may be implemented in blocks 410-430 of method 400 and/or blocks 510-540 of method 500. Specifically, the PC encoding method 800 may be performed by the electronic processor (e.g., processor 110) of the encoder 200. Method 800 does not include inpainting using deep learning as described above with method 600.

A geometry encoder 810 provides outputs of encoded geometry, decoded geometry, and tracked or transferred attributes. As described above with respect to method 400 and 500, the geometry is encoded and decoded at blocks 410, 420 of method 400 and blocks 510, 520 of method 500. The attributes encoder 820 receives the decoded geometry and the tracked or transferred attributes as inputs. For example, the tracked attributes may be received with the decoded geometry as described with respect to block 430 of method 400 or the transferred attributes may be received with the decoded geometry as described with respect to block 540 of method 400.

The decoded geometry and attributes are used to generate point projections 830 which includes patch placement 840 of projected points. Patch placement 840 includes the placement of projectable points on a 2D surface as described above. A collection of non-projected points is not determined in method 800. The attributes of projected points are encoded at block 850. The attributes of projected points may be encoded using traditional codecs or deep learning based codecs.

The bitstream 860 is generated from the encoded geometry and the encoded projected point attributes. The bitstream 860 does not include residuals relating to inpainting using deep learning.

FIG. 9 is a block diagram illustrating an example PC decoding method 900 that may be implemented in blocks 450-460 of method 400 and/or blocks 560-570 of method 500. Specifically, the PC decoding method 900 may be performed by the electronic processor (e.g., processor 110) of the decoder 300. The PC decoding method 900 may be used by a decoder 300 to decode the bitstream 860 that does not include inpainting residuals as generated by method 800.

The bitstream 860 is processed to separate the portions relating to the geometry and the attributes. The geometry is decoded at block 910 from the separated portion of the bitstream 860. The attributes decoder 920 receives the decoded geometry and the portions of the bitstream 860 corresponding to the attributes. The attributes are decoded at block 930. The attributes may be decoded using a traditional codec or a deep learning codec depending on the encoding scheme.

The decoded geometry is used to generate point projections 940 which includes patch placement 950 of projected points and a collection of non-projected points 960. Patch placement 950 includes the placement of projectable points on a 2D surface as described above. The decoded attributes from block 930 are applied to the patch placement 950 and a reconstructed point cloud is generated at block 970.

The reconstructed point cloud and the collection of non-projected points 960 are provided as inputs to a prediction block 980. From the reconstructed point cloud, the prediction block 980 may determine which decoded geometry points do not have corresponding attributes. The prediction block 980 inpaints the non-projected point attributes using deep learning as further explained below and generates predictions for the non-projected point attributes.

The predictions from the prediction block 980 are combined with the decoded attributes from block 930 to generate the decoded point attributes 990.

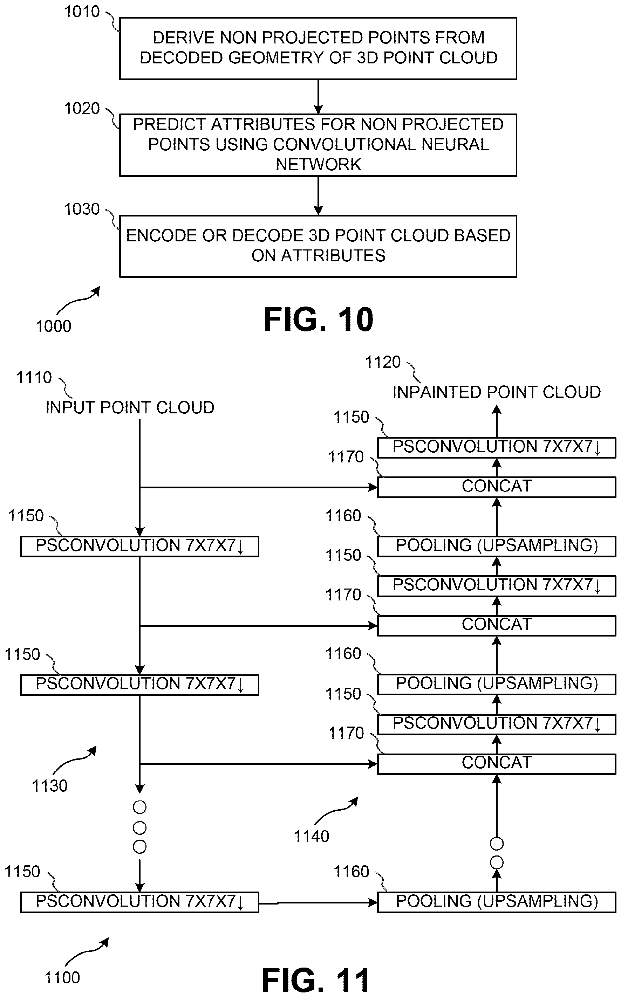

FIG. 10 is a flowchart of an example method 1000 for encoding or decoding a 3D PC that is discussed above according to some embodiments. As an example, the method 1000 described herein is performed by an encoder 200 (shown in FIG. 2) or by a decoder 300 (shown in FIG. 3). The method 1000 is described herein as being performed by an electronic processor (e.g., processor 110) of the encoder 200 or the decoder 300.

At block 1010, the method 1000 includes deriving non projected points from decoded geometry of 3D point cloud. The non projected points may be derived differently at the encoder 200 and the decoder 300 as described above. At the decoder 300, the electronic processor decodes the geometry and the attributes and applies the decoded attributes to the decoded geometry. The electronic processor then determines which geometry points in the decoded geometry do not have matching attributes in the decoded attributes. The geometry points with the missing attributes are the non-projected points. At the encoder 200, the electronic processor decodes the geometry. However, since the projected point attributes are already available to the encoder, the electronic processor may simply apply the projected point attributes and determine which geometry points in the decoded geometry do not have matching attributes. The geometry points with the missing attributes are the non-projected points.

At block 1020, the method 1000 includes predicting attributes for non-projected points using a CNN (e.g., CNN 1100 as shown in FIG 11). In one example, the electronic processor generates a reconstructed point cloud from the decoded geometry. The projection attributes or the decoded attributes may also be used to generate the reconstructed point cloud. The reconstructed point cloud includes the non-projected points, i.e., geometry points that do not include matching attributes. The CNN 1100 which may be trained as explained below inpaints the missing attributes based on the reconstructed point cloud. That is, the CNN 1100 predicts the missing attributes (i.e., predicted attributes) for the 3D point cloud. In other examples, a different input rather than the reconstructed point cloud may be provided to the CNN 1100.

At block 1030, the method 1000 includes encoding or decoding the 3D point cloud based on the attributes. The predicted attributes are used to encode or decode the 3D point cloud. At the encoder 200, the predicted attributes are used to compute residuals. The residuals computed based on the predicted attributes are included in the bitstream. At the decoder 300, the predicted attributes are used to decode the 3D point cloud and recreate or complete the 3D point cloud from the bitstream.

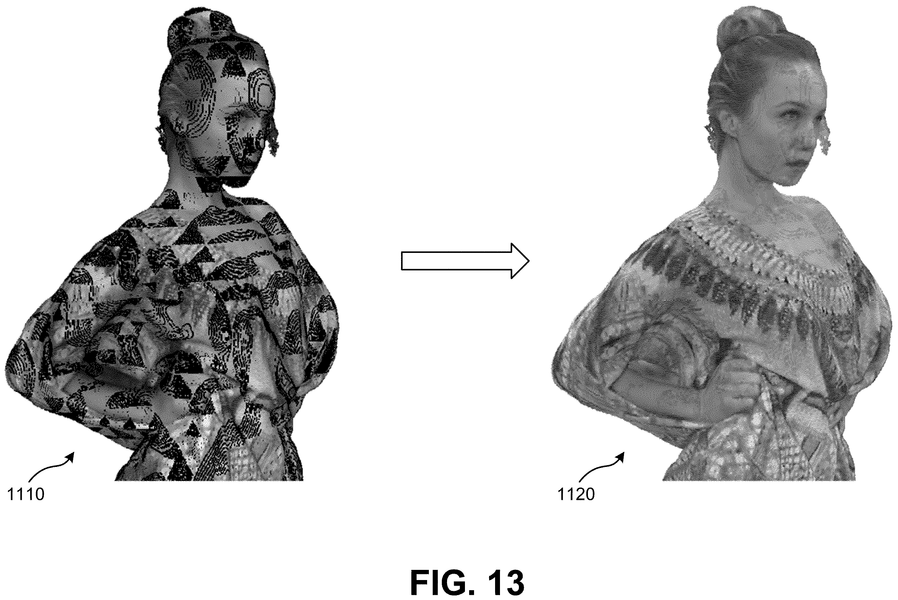

FIG. 11 illustrates an example structure of the CNN 1100 for encoding or decoding the 3D point cloud that is discussed above according to some embodiments. The CNN 1100 receives an initial point cloud 1110 (e.g., as shown in FIG. 13) as an input and provides an inpainted point cloud 1120 (e.g., as shown in FIG. 13) as an output. The reconstructed point cloud as discussed above in method 1000 may be provided as the initial point cloud 1110 input to the CNN 1100. The CNN 1100 generates the inpainted point cloud 1120 based on the initial point cloud 1110.

In the example illustrated, the CNN 1100 includes a U-Net style or U-Net like architecture having a contracting path 1130 and an expanding path 1140. The CNN 1100 includes successive partial sparse convolution layers 1150. Each partial sparse convolution layer 1150 may have a different kernel size and may increase or decrease the number of channels in the data. For example, the first convolution layer 1150 may have a kernel of 7x7x7, input channels size of 3 (e.g., representing RGB), and an output channel size of 64. The output channels may be treated as feature channels. The number of channels can be increased and decreased throughout the network of partial sparse convolution layers 1150. In one example, the number of channels is progressively increased (e.g., by a factor of 2) on the contracting path 1130 and progressively decreased (e.g., same factor as contracting path 1130) on the expanding path 1140.

The input point cloud 1110 is progressively downsampled on the contracting path 1130 while extracting deep features. The non projected points are filled during the downsampling. The deep features may be extracted by increasing the number of channels in the convolutions. The input point cloud 1110 is upsampled using upsamplers 1160 on the expanding path 1140 while adding the extracted deep features using concatenators 1170. The initial features from the already filled voxels (e.g., points that were projected) pass through the convolutional layers 1150 and contribute to the final reconstructions of the point cloud as described below. In some examples, the CNN 1100 includes an activation function after each of the partial sparse convolution layers. The activation function is a layer in the CNN 1100 architecture that serves the purpose of adding non-linearities to the convolutions. The activation function layer may include, for example, a rectified linear unit (ReLU), a leaky ReLU, or the like.

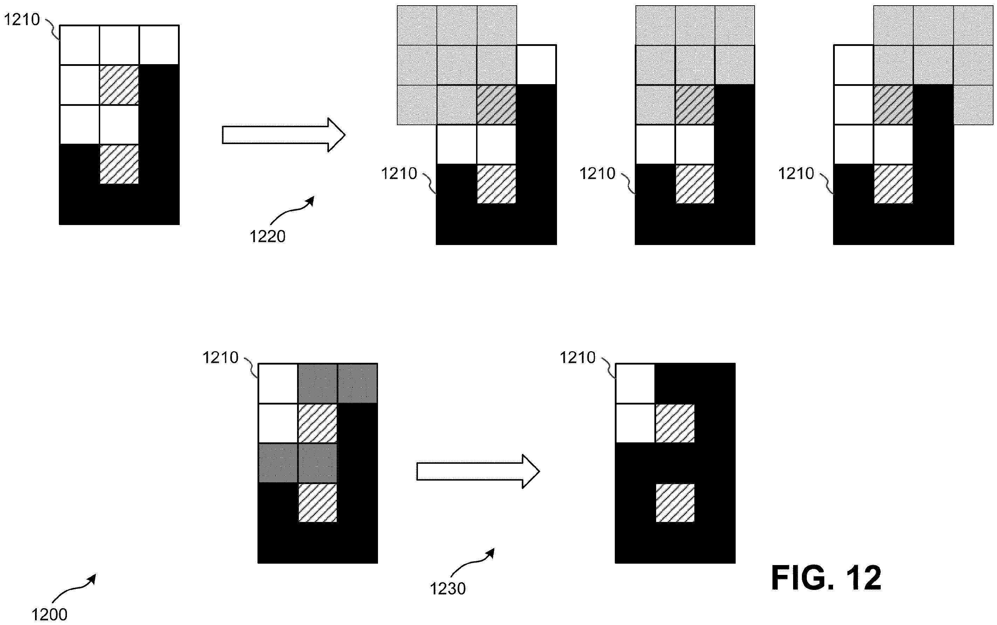

FIG. 12 illustrates an example partial sparse convolution process 1200 that is discussed above according to some embodiments. The partial sparse convolution process 1200 illustrates how a point cloud 1210 is processed by partial sparse convolution layers 1150 of FIG. 11. The voxels of a 3D point cloud can be classified into valid voxels and non-valid voxels. The non-valid voxels do not carry any information (i.e., attributes) that can be used to render the 3D image/video/graphic. That is, the non-valid voxels may be empty voxels. The valid voxels can be further classified into filled voxels and unfilled voxels. Filled voxels are valid voxels for which attributes are available and applied. Filled voxels may already be filled in the input point cloud 1120 or may be filled by inpainting using the CNN 1100 during a previous partial sparse convolution pass. That is, filled valid voxels are updated with at least one valid point (e.g., decoded attributes or inpainted attributes) during a partial sparse convolutional pass. Unfilled voxels are valid voxels for which attributes need to be inpainted using the CNN 1100. FIG. 13 illustrates an example of the input point cloud 1110 and the resulting inpainted point cloud 1120.

A mask may be applied to the filled voxels to indicate that the voxel has been previous validated either using the original decoded geometry and attributes or during a previous run of a partial sparse convolution layer. In the point cloud 1210, black voxels represent filled valid voxels, white voxels represent unfilled valid voxels, and patterned voxels represent non-valid voxels. At step 1220, partial sparse convolution is performed on all voxels regardless of whether the voxels are filled or unfilled. At step 1230, voxels that are inpainted in the present partial sparse convolution are identified (in grey). And the mask is applied to the inpainted voxels for the next partial sparse convolution pass. Valid voxels of the reconstructed 3D point cloud are masked after each successive sparse convolution layer 1150 pass. Example python code for implementing the mask is provided below:

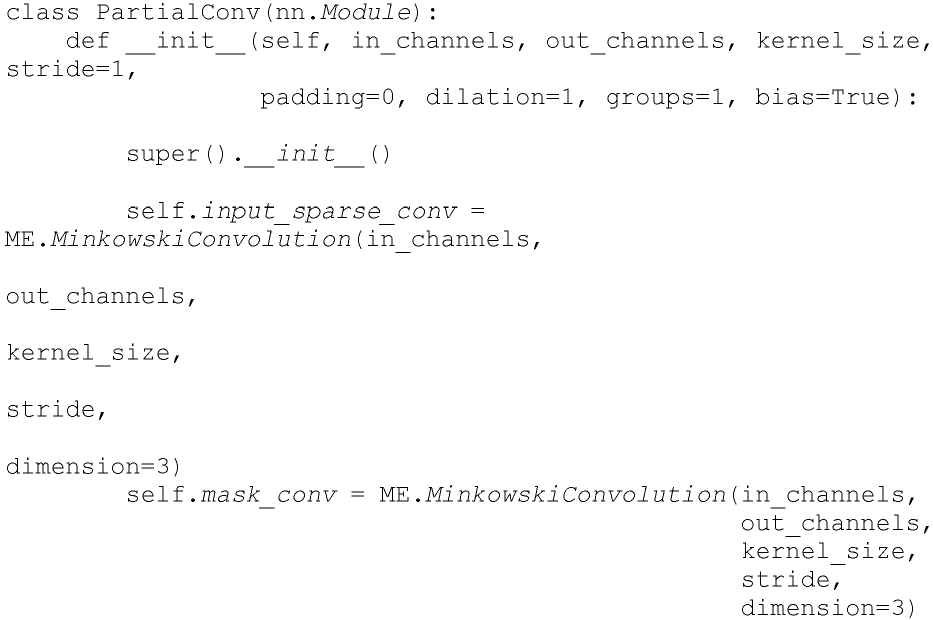

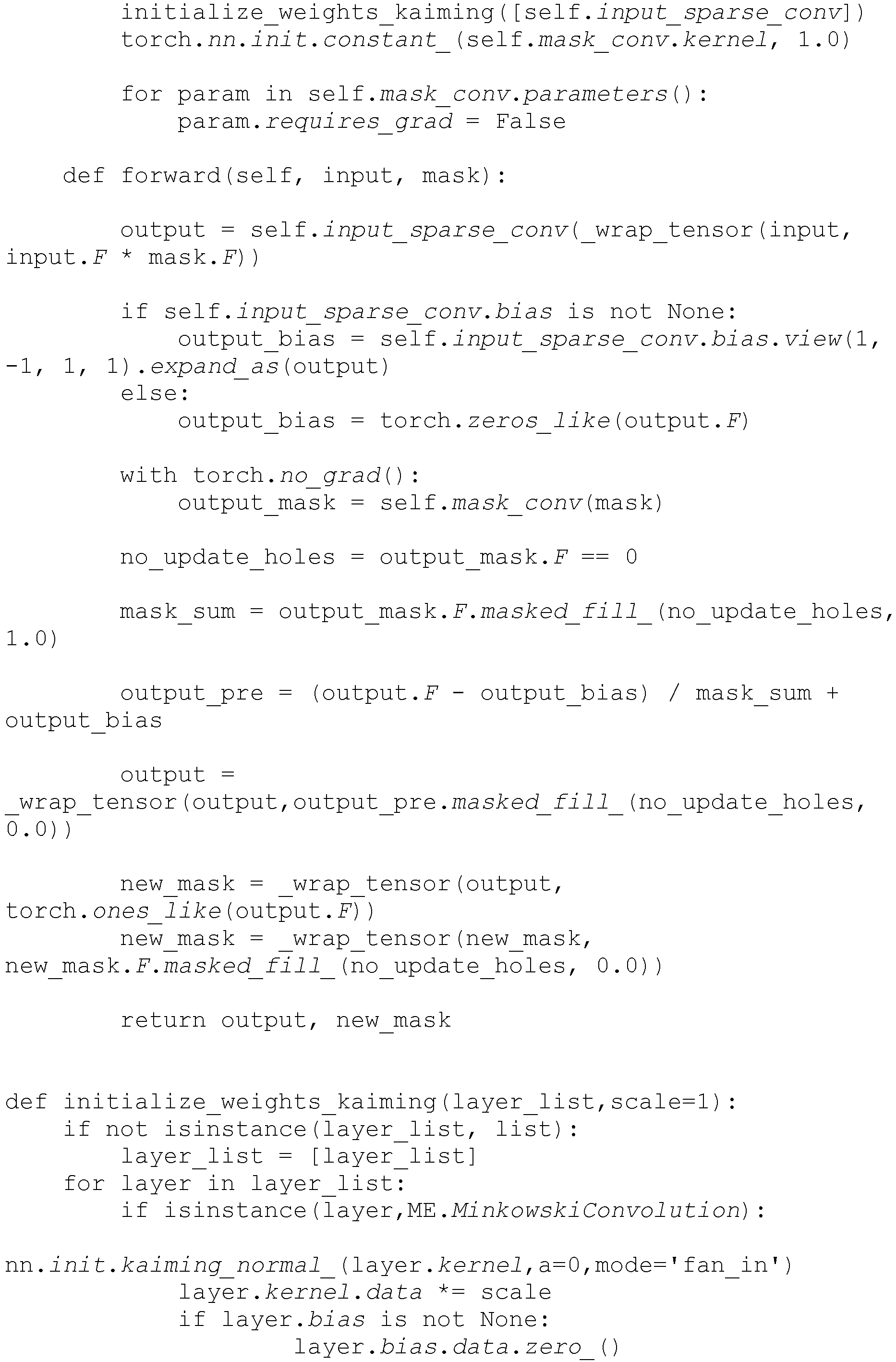

Returning to FIG. 11, the CNN 1100 may be trained with projection images remapped in the point cloud structure using a mask that indicates which points are not projected. A supervised training may be used to train the CNN 1100. The original point with all the points is used as the ground truth and the output of the inpainting model is compared to the ground truth. In one example, the loss may be determined as the sum of (i) Mean Squared Error difference between the original points and the reconstructed points of non-projected points; and (ii) Mean Squared Error difference between the original points and the reconstructed points of the voxels that are present.

In some examples, a value of 0 is assigned for non-projected points in an input during supervised training. In other examples, a first initial color derived using incremental prediction is assigned for non-projected points in an input during supervised training. The model can use the initial approximate to focus on the refinement of inpainting. In yet other examples, an RGB vector of [127,127,127] is assigned for non-projected points in an input during supervised training. In some examples, a normal vector may be included for each point. The normal vectors can be used to determine a block behind a current block. Inpainting can be improved by assigning the attribute of the block behind the current block as then initial value for the current block. In some examples, an attribute value of one or more closest neighbors can be assigned as the initial value for the non-projected point.

In some embodiments, signaling flags may be included in the bitstream (e.g., bitstream 655 or bitstream 860) to signal presence or absence of certain feature according to TABLE 1 below. The signaling flags may be concatenated with the data representative of the 3D point cloud. An approach flag (e.g., a second flag) may be used to indicate whether the 3D point cloud is encoded using projection and a 2D codec. For example, a 0 value for the approach flag indicates that an end to end deep learning based approach in 3D is used and a 1 value for the approach flag indicates that projection and 2D codec (as described above) is used. An architecture flag (e.g., fourth flag) may be used to indicate the photometry codec architecture, i.e., whether the 3D point cloud is encoded using a 2D learning based codec. For example, a 0 value for the architecture flag indicates that a 2D deep learning based codec is used and a 1 value for the architecture flag indicates that a 2D classic codec is used. An inpainting flag (e.g., a first flag) may be used to indicate whether an inpainting deep learning prediction is used to encode the 3D PC. For example, a 0 value for the inpainting flag indicates that a traditional prediction is to be used to decode a point cloud and a 1 value for the inpainting flag indicates that an inpainting deep learning prediction (e.g., as described above) is to be used to decode the point cloud. A residuals flag (e.g., third flag) may be used to indicate whether residuals of inpainting deep learning prediction are included in the bitstream. For example, a 0 value for the residuals flag indicates that residuals are sent through the bitstream and a 1 value for the residuals flag indicates that inpainting is only performed on the decoder side.

**TABLE 1**

| Flag | Values | # of Bits |
|---|---|---|
| APPROACH | 0 -> Use end to end deep learning in 3D | 1 |
| | 1 -> Use projection and 2D codec | |
| ARCHITECTURE | 0 -> use 2D Deep Learning Based Codec | 1 |
| | 1 -> use 2D Classic Codec | |
| INPAINTING | 0-> use traditional prediction | 1 |
| | 1-> use inpainting deep learning prediction | |
| RESIDUALS | 0 - > send residuals through bitstream | 1 |
| | 1 -> use inpainting only on the decoder side | |

The above described techniques leverage a learning-based architecture to reconstruct points lost in the projection process. The CNN 1100 can be trained end to end to the specific characteristics of the missed non-projected points.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Example 1. A computer-implemented method for point cloud encoding or decoding comprising: deriving non-projected points from decoded geometry of a three-dimensional -3D-point cloud; predicting attributes for the non-projected points using a convolutional neural network; and encoding or decoding the 3D point cloud based on the attributes.

Example 2. The computer-implemented method of Example 1, wherein the convolutional neural network has U-Net style architecture.

Example 3. The computer-implemented method of Example 2, wherein the convolutional neural network includes successive partial sparse convolution layers.

Example 4. The computer-implemented method of Example 3, wherein predicting attributes for the non-projected points using the convolutional neural network comprises: receiving a reconstructed 3D point cloud as an input of the convolutional neural network.

Example 5. The computer-implemented method of Example 4, wherein predicting attributes for the non-projected points using the convolutional neural network further comprises: outputting an inpainted 3D point cloud as an output of the convolutional neural network.

Example 6. The computer-implemented method of any of Examples 4-5, wherein the reconstructed 3D point cloud is reconstructed using decoded geometry of the 3D point cloud.

Example 7. The computer-implemented method of any of Examples 4-6, wherein predicting attributes for the non-projected points using the convolutional neural network comprises: masking filled valid voxels of the reconstructed 3D point cloud after each successive partial sparse convolution layer pass, wherein the filled valid voxels are updated with at least one valid point during a partial sparse convolutional pass.

Example 8. The computer-implemented method of any of Examples 3-7, wherein the convolutional neural network includes an activation function after each of one or more partial sparse convolution layers.

Example 9. The computer-implemented method of Example 8, wherein the activation function is one selected from a group consisting of rectified linear unit -ReLU- and Leaky ReLU.

Example 10. The computer-implemented method of any of the preceding Examples, further comprising: performing supervised training of the convolutional neural network.

Example 11. The computer-implemented method of Example 10, wherein performing supervised training of the convolutional neural network comprises: determining a loss as a sum of (i) mean squared error difference between original points of an original 3D point cloud and reconstructed points of non-projected points and (ii) mean squared error difference between the original points and reconstructed points of voxels that are present.

Example 12. The computer-implemented method of Example 11, wherein performing supervised training of the convolutional neural network comprises: assigning a value of 0 for non-projected points in an input during supervised training.

Example 13. The computer-implemented method of Example 11, wherein performing supervised training of the convolutional neural network comprises: assigning an RGB vector [127, 127, 127] for non-projected points in an input during supervised training.

Example 14. The computer-implemented method of Example 11, wherein performing supervised training of the convolutional neural network comprises: assigning a first initial color derived using incremental prediction for non-projected points in an input during supervised training.

Example 15. A bitstream comprising: data representative of a 3D point cloud.

Example 16. The bitstream of Example 15, further comprising: a first flag indicating whether an inpainting deep learning prediction is used to encode the 3D point cloud.

Example 17. The bitstream of any of Examples 15-16, further comprising: a second flag indicating whether the 3D point cloud is encoded using projection and a two-dimensional -2D-codec.

Example 18. The bitstream of any of Examples 15-17, further comprising: a third flag indicating whether residuals of inpainting deep learning prediction are included in the bitstream.

Example 19. The bitstream of any of Examples 15-18, further comprising: a fourth flag indicating whether the 3D point cloud is encoded using a 2D learning based codec.

Example 20. A device including an encoder configured to perform a method according to any of Examples 1-14.

Example 21. The device of Example 20, wherein the encoder is configured to encode the 3D point cloud into the bitstream of any of claims 15-19.

Example 22. A device including a decoder configured to perform a method according to any of Examples 1-14.

Example 23. The device of Example 22, wherein the decoder is configured to decode the 3D point cloud from the bitstream of any of claims 15-19.

Example 24. A system including an encoder and a decoder, wherein only the decoder is configured to perform a method according to any of Examples 1-14.

Example 25. A non-transitory computer-readable medium comprising instructions that, when executed by an electronic processor, causes the electronic processor to perform the method of any of Examples 1-14.

Various methods and aspects described herein can be used to modify one or more modules. For example, the intra predictors and inter predictors described with respect to FIGS. 2 and 3 may be implemented as one or more modules and modified according to the various embodiments of the present disclosure.

The various embodiments described herein provide at least the following features, devices or aspects, alone or on any combination, across various claim categories and types:
i. Encoding, into coded video data, syntax elements that can enable the decoder to decode the coded video data, according to any of the embodiments described herein.
ii. A bitstream that includes one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. hypertext transfer protocol (HTTP) live Streaming (HLS) manifest transmitted over HTTP.
iii. dynamic adaptive streaming over HTTP (DASH) media presentation description (MPD) descriptors, for example as used in DASH and transmitted over HTTP.
iv. RTP header extensions, for example as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of' is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A computer-implemented method for point cloud encoding or decoding comprising:
deriving non-projected points from decoded geometry of a three-dimensional -3D-point cloud;
predicting attributes for the non-projected points using a convolutional neural network; and
encoding or decoding the 3D point cloud based on the attributes.

2. The computer-implemented method of claim 1, wherein the convolutional neural network has U-Net style architecture and includes successive partial sparse convolution layers,
wherein predicting attributes for the non-projected points using the convolutional neural network comprises:
receiving a reconstructed 3D point cloud as an input of the convolutional neural network, wherein the reconstructed 3D point cloud is reconstructed using decoded geometry of the 3D point cloud; and
outputting an inpainted 3D point cloud as an output of the convolutional neural network.

3. The computer-implemented method of claim 2, wherein predicting attributes for the non-projected points using the convolutional neural network comprises:
masking filled valid voxels of the reconstructed 3D point cloud after each successive partial sparse convolution layer pass, wherein the filled valid voxels are updated with at least one valid point during a partial sparse convolutional pass.

4. The computer-implemented method of any of claims 2-3, wherein the convolutional neural network includes an activation function after each of one or more partial sparse convolution layers, wherein the activation function is one selected from a group consisting of rectified linear unit -ReLU- and Leaky ReLU.

5. The computer-implemented method of any of the preceding claims, further comprising:
performing supervised training of the convolutional neural network.

6. The computer-implemented method of claim 5, wherein performing supervised training of the convolutional neural network comprises:
determining a loss as a sum of (i) mean squared error difference between original points of an original 3D point cloud and reconstructed points of non-projected points and (ii) mean squared error difference between the original points and reconstructed points of voxels that are present.

7. The computer-implemented method of claim 6, wherein performing supervised training of the convolutional neural network comprises:
assigning one selected from a group consisting of a value of 0, an RGB vector [127, 127, 127], and a first initial color derived using incremental prediction for non-projected points in an input during supervised training.

8. A bitstream comprising:
data representative of a 3D point cloud; and
a first flag indicating whether an inpainting deep learning prediction is used to encode the 3D point cloud.

9. The bitstream of claim 8, further comprising at least one selected from the group consisting of:
a second flag indicating whether the 3D point cloud is encoded using projection and a two-dimensional -2D- codec, a third flag indicating whether residuals of inpainting deep learning prediction are included in the bitstream, and a fourth flag indicating whether the 3D point cloud is encoded using a 2D learning based codec.

10. A device including an encoder configured to perform a method according to any of claims 1-7.

11. The device of claim 10, wherein the encoder is configured to encode the 3D point cloud into the bitstream of any of claims 8-9.

12. A device including a decoder configured to perform a method according to any of claims 1-7.

13. The device of claim 12, wherein the decoder is configured to decode the 3D point cloud from the bitstream of any of claims 8-9.

14. A system including an encoder and a decoder, wherein only the decoder is configured to perform a method according to any of claims 1-7.

15. A non-transitory computer-readable medium comprising instructions that, when executed by an electronic processor, causes the electronic processor to perform the method of any of claims 1-7.
